# EUROPÄISCHE PATENTSCHRIFT

(11) **EP 0 879 721 B1**
(45) Veröffentlichungstag und Bekanntmachung des Hinweises auf die Patenterteilung: **13.09.2000**
(21) Anmeldenummer: 98109137.4
(22) Anmeldetag: 16.05.1998
(51) Int. Cl.: B60J 5/10

(54) **Heckportalträgerkombination für Fahrzeuge aller Art mit beweglichem Dach**
Rear portal beam assembly for all kinds of vehicles provided with mobile roof
Disposition constructive de longeron pour porte arrière de véhicules de toutes types avec toit amovible

(30) Priorität: 22.05.1997 DE 19721333
(43) Veröffentlichungstag der Anmeldung: 25.11.1998
(73) Patentinhaber: Kurt Dinkel Karosserie-Fahrzeugbau GmbH, 09618 Brand-Erbisdorf (DE)
(72) Erfinder: Dinkel, Christoph, 97877 Wertheim (DE); Hoh, Axel, 97877 Wertheim-Nassig (DE); Wagner, Ralf, 01723 Kesselsdorf (DE)
(74) Vertreter: Helling, Siegfried

(56) Entgegenhaltungen:
- DE-U- 8 903 686
- FR-A- 2 667 022
- US-A- 3 160 436

## Beschreibung

Die Erfindung ist im Fahrzeug- und Karosseriebau anzuwenden, vorzugsweise wo Fahrzeuge für den Stückgut- oder Containertransport hergestellt oder umgerüstet werden.

Im Stückgut- und Containerverkehr ist die Be-/Entladung der Fahrzeuge seitlich, heckseitig oder von oben durch Gabelstappler oder Krananlagen üblich. Dementsprechend ist auch der konstruktive Aufbau der Fahrzeuge. So kann das Dach demontierbar, einseitig liftbar, komplett hebbar und/oder faltbar gestaltet sein. Für die Be-/Entladung heckseitig durch Gabelstapler oder Krananlagen wirkt sich der Heckportalträger störend aus, weshalb die unterschiedlichsten Konstruktionen im Karosseriebau angeboten werden. So wird in der DE-GM 1 691 844 für einen Thermos-Lastzug zur Be- und Entladung artfremder Güter durch Kräne ein zoll- und einbruchssicheres von innen verschraubbares abnehmbares Dach mit gesondert herausnehmbarem Querträger beschrieben. Bei dieser Konstruktion ist der Querträger mit den Seitenwänden des Fahrzeugaufbaus durch schwalbenschwanzförmige Keilnuten und von unten mittels Schrauben fest mit der Gesamtkonstruktion verbunden. Die Dachbefestigung erfolgt durch Verschraubung mit den Seitenträgern nach der Montage des Trägers, durch den eine Maßhaltigkeit für die Schraubenführung Dach-Seitenträger gewährleistet ist. Diese Konstruktion ist auf Grund des Zeitaufwandes für die De- und Montage sowie der Umständlichkeit für einen ständigen Be-/Entladebetrieb mittels Kran oder Gabelstapler völlig ungeeignet. Für bewegliche Dächer sind in den einschlägigen Prospekten der horizontal ausschwenkbare Heckportalträger oder der völlig fehlende Heckportalträger zu finden. Der horizontal ausschwenkbare Querträger muß in der üblichen Fahrzeughöhe von 4 m bewegt werden und ragt mit seiner Länge von ca. 2,5 m nach hinten oder seitlich über die Wagenbreite hinaus, was eine Unfallquelle darstellt und auch zur Beschädigung des Trägers oder der Be-/Entladegeräte bei Unachtsamkeit führen kann. Bei Wegfall des Heckportalträgers tritt eine Instabilität des Heckaufbaus ein und wirkt sich negativ auf die Einsatzmöglichkeit und die Nutzungsdauer aus. Außerdem müssen bei dieser konstruktiven Anordnung nicht nur bei einer von oben oder heckseitig durchzuführenden Be-/Entladung, sondern auch zum kompletten Heben des Daches zur Be-/Entladung die mit dem Dach verriegelten Hecktüren geöffnet bzw. die Heckplane vom Dach manuell gelöst werden. Aus diesem Grunde ist bei heckseitigem Planenverschluß als "Ersatzträger" zum Verzurren der Plane auch ein abnehmbarer nicht mit dem Dach verbundener Heckspriegel üblich, der jedoch bei einer Heckbe-/entladung manuell abgenommen und wieder aufgesetzt werden muß. Diese Arbeiten sind zeitaufwendig und nicht ungefährlich.

Aufgabe der Erfindung ist es, die beschriebenen Nachteile und Schwierigkeiten bei der Vorbereitung zur Be-/Entladung weitestgehend zu beheben.

Die erfindungsgemäße konstruktive Lösung nach den Ansprüchen 1 und 2 der Aufgabe beinhaltet eine Heckportalträgerkombination, die den Heckportalträger in seiner Eigenschaft erhält, die starre Verbindung (z.B. verschweißt oder mit Winkel verschraubt) jedoch durch eine lösbare, in seiner Festigkeit und Kraftaufnahme ebenbürtigen Verbindung ersetzt. Die lösbare Verbindung kann in bekannterweise z.B. durch Bolzen und Hülse oder durch einen pyramidenstumpfförmigen Zapfen und eine dementsprechende Führung erfolgen. Dabei sind konstruktionsseitig unbedingt die vom Träger aufzunehmenden Kräfte, die besonders durch die Zentrifugalkräfte während der Fahrt in Kurven auftreten, zu beachten. Der so konstruierte Heckportalträger lagert geführt und gesichert verbunden auf den Heckseitenstützen und gibt dem Rahmenaufbau die gewünschte Stabilität. Desweiteren ist der Heckportalträger durch Führung und Sicherung der Verbindung mit dem Heckspriegel des beweglichen Daches (Schiebe-, Falt- oder festes Hubdach) lösbar zu koppeln. In Fahrbereitschaft ist der Heckportalträger mit den Heckseitenstützen (Trägerfunktion) und dem Heckspriegel (Dachverschluß) verbunden.

Zur Vorbereitung der Be-/Entladung kann je nach Bedarf der Heckportalträger bei gelöster Sicherung der Verbindung gegenüber den Heckseitenstützen mit dem Heckspriegel aus der Führung der Heckseitenstützen bei Dachöffnung und/oder Dachhub bewegt werden. Ist das Entfernen des Heckportalträgers nicht erforderlich, z.B. beim einseitigen Dachanheben, so verbleibt er bei gesicherter Verbindung gegenüber den Heckseitenstützen und gelöster Verbindung zum Heckspriegel bei Dachöffnung und/oder Dachhub als Heckportalträger auf den Heckseitenstützen.

Je nach Dach- und Heckspriegelkonstruktion ist eine unterschiedliche Ankopplung Heckportalträger-Heckspriegel sowie Heckseitenstützen-Heckportalträger vorzusehen. So kann der Heckspriegel des Schiebe- oder Faltdaches horizontal an den Heckportalträger gekoppelt und der Heckportalträger bei gelöster Sicherung der Verbindung gegenüber den Heckseitenstützen mit dem Heckspriegel horizontal in Richtung Stirnwand verschoben werden. Ist der Heckspriegel in bekannterweise als Klappspriegel ausgebildet, so muß die Führung und Verbindung Heckportalträger-Klappspriegel vertikal angeordnet und dem Hub des Klappspriegels angepaßt sein, so daß der Heckportalträger bei gelöster Verbindung zu den Heckseitenstützen aus der Führung gehoben und mit dem Klappspriegel in Richtung Stirnwand befördert wird.

Jede lösbare Verbindung stellt eine gewisse Instabilität dar und sollte aus Verschleißgründen nur notwendigerweise benutzt werden. Es bietet sich deshalb für Fahrzeuge, die keine Trennung zwischen beweglichem Dach und Heckportalträger benötigen, an, die lösbare Verbindung Heckportalträger-Heckspriegel als starre Verbindung zu gestalten bzw. den Heckportalträger als Heckspriegel konstruktiv auszubilden In diesem besonderen Falle der erfinderischen Gestaltung wird der Heckportalträger immer bei Dachöffnung und/oder Dachhub und gelöster Sicherung der Verbindung Heckportalträger-Heckseitenstützen mit dem Dach bewegt. Die starre Verbindung Heckportalträger-Heckspriegel kann beispielsweise durch Verschraubung, Verschweißen oder durch Fixierung der lösbaren Verbindung durch gesonderte Verschraubung hergestellt werden.

Um die Produktionskosten der Nutzfahrzeuge mit beweglichem Dach zu minimieren, ist es nach der erfinderischen Idee vorteilhaft einen multifunktionellen Heckportalträger für die unterschiedlichen Aufbaukonstruktionen herzustellen. Das wird erreicht durch die wahlweise Umwandlung der lösbaren Verbindungen in starre durch zusätzliche Arretierung, wie bereits oben beschrieben. Der so gestaltete Heckportalträger ist montierbar als
- Heckportalträger mit starrer Verbindung zu den Heckseitenstützen und lösbarer Verbindung zum Heckspriegel des beweglichen Daches,
- Heckportalträger mit starrer Verbindung zu den Heckseitenstützen und fehlender Verbindung zum Dach in bekannter Trägeranordnung,
- Heckportalträgerkombination mit lösbarer Verbindung zu den Seitenstützen und lösbarer Verbindung zum Heckspriegel des beweglichen Daches,
- Heckportalträgerkombination mit lösbarer Verbindung zu den Heckseitenstützen und starrer Verbindung mit dem Dach.
Zur weiteren Vereinfachung der Trägerkonstruktion ist es vorteilhaft, die Führung der Verbindung am/im Träger anzuordnen und die Verbindungselemente dem Heckspriegel und/oder den Heckseitenstützen zuzuordnen.

Vorteilhafterweise werden die Führungselemente so gewählt, daß sie gleichzeitig als lösbare Verbindungselemente fungieren. Wie bereits ausgeführt, eignen sich dafür besonders die Elemente Bolzen und Hülse. Bei der oben angeführten horizontalen Kopplung mit dem Heckspriegel ist für die Kopplung Heckseitenstützen-Heckportalträger eine Trennung zwischen Führungs- und Verbindungselement vorteilhaft.

Die lösbaren Verbindungen sind in bekannterweise zu sichern, wobei die Sicherung von Hand oder automatisch zu entriegeln und zu verriegeln ist. So können die Kopplungsvorgänge auch selbsttätig erfolgen. Als Beispiel kann eine solche Sicherung aus einem in der Hülse seitlich eingelassenen beweglichen, federgespannten Spunt, der in eine Nut im Bolzen einrastet, bestehen. Die selbsttätige Verriegelung erfolgt dann beim Kopplungsvorgang durch Hereindrücken des Spuntes gegen den Federdruck durch den konisch zugespitzten Bolzen bis der Spunt durch den Federdruck in die Nut des Bolzens gleitet. Eine Verriegelung z.B. von Hand mittels Gestänge kann durch eine exzentrisch gelagerte Scheibe erfolgen, die nach Schluß der Verbindung in eine seitlich in den Verbindugszapfen oder Bolzen eingefräßte Nut gedreht wird.

Die Führungs- und Verbindungselemente sowie Sicherungsmöglichkeiten sind bekannt. Es können hierfür viele Varianten zur Anwendung kommen. Da bei der Kopplung Heckspriegel-Heckportalträger eine Führung der Verbindungselemente nicht zwingend erforderlich ist, kann diese Verbindung eleganterweise auch über Magnetschluß erfolgen.

Bei der Anwendung der Erfindung ist es vorteilhaft, den erfindungsgemäßen Heckportalträger aus Leichtbaustoffen zu fertigen, da der Träger häufig bewegt werden muß. Als Material kommen sowohl Leichtmetalle wie auch Kunststoffkombinationen, z.B. kohlefaser- oder glasfaserverstärkt, in Frage.

Die Erfindung soll an Hand von 11 schematischen Figuren mit Anwendungsbeispielen näher erläutert werden. Es zeigen
- fig. 1: seitlich den oberen Heckaufbau bei geschlossenem Dach mit Klappspriegel
- fig. 2: heckseitig die Ansicht der fig. 1
- fig. 3: eine Trennung zwischen Heckspriegel und Heckportalträger zum Dachöffnen nach fig. 1
- fig. 4: eine Trennung zwischen Heckportalträger und Heckseitenstützen zum Dachöffnen mit angekoppeltem Heckportalträger nach fig. 1
- fig. 5: einen einseitigen Dachhub ohne Heckportalträgerbewegung
- fig. 6: einen Dachhub ohne Heckportalträgerbewegung
- fig. 7: seitlich eine horizontale Kopplung Heckspriegel-Heckportalträger sowie Heckportalträger-Heckseitenstützen
- fig. 8: eine Draufsicht auf eine horizontale Kopplung nach fig. 7
- fig. 9: eine starre Verbindung durch Verschraubung Heckspriegel-Heckportalträger mit lösbarer Verbindung Heckportalträger-Heckseitenstützen
- fig. 10: eine starre Verbindung durch Verschraubung Heckportalträger-Heckseitenstützen mit lösbarer Verbindung Heckspriegel-Heckportalträger
- fig. 11: eine starre Verbindung durch Verschraubung Heckportalträger-Heckseitenstützen ohne Verbindung Heckspriegel-Heckportalträger.

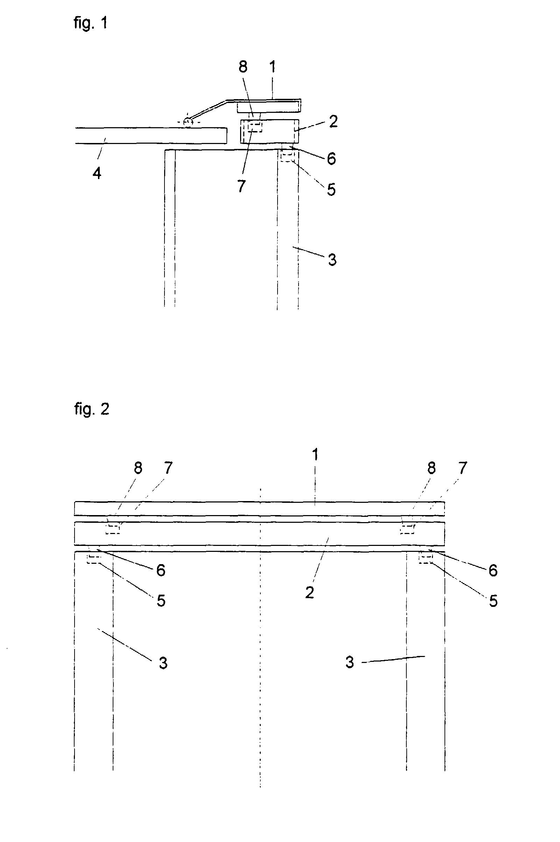

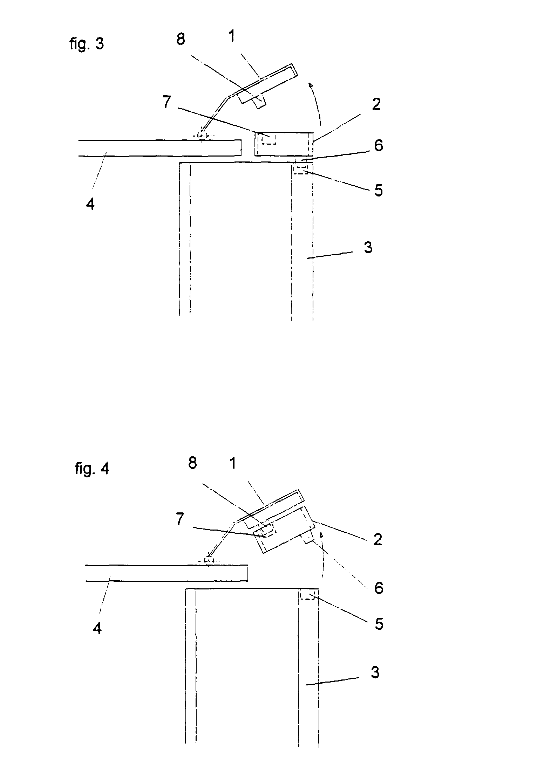

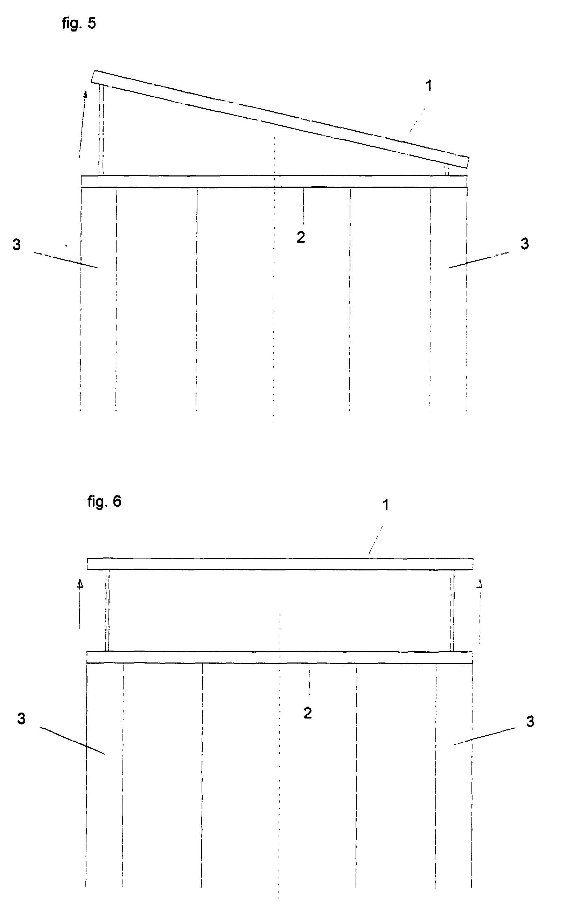

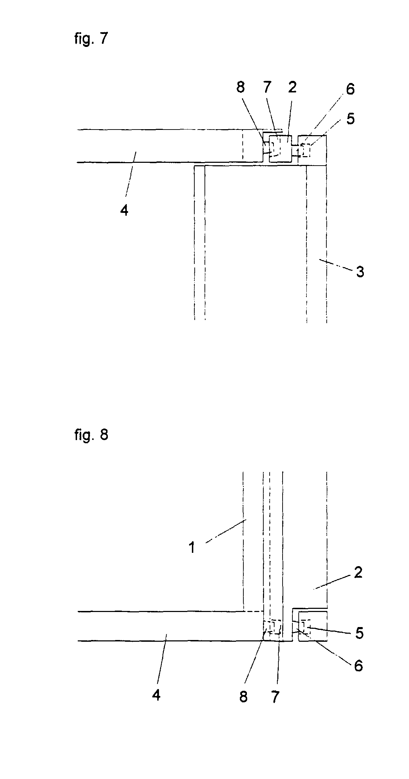

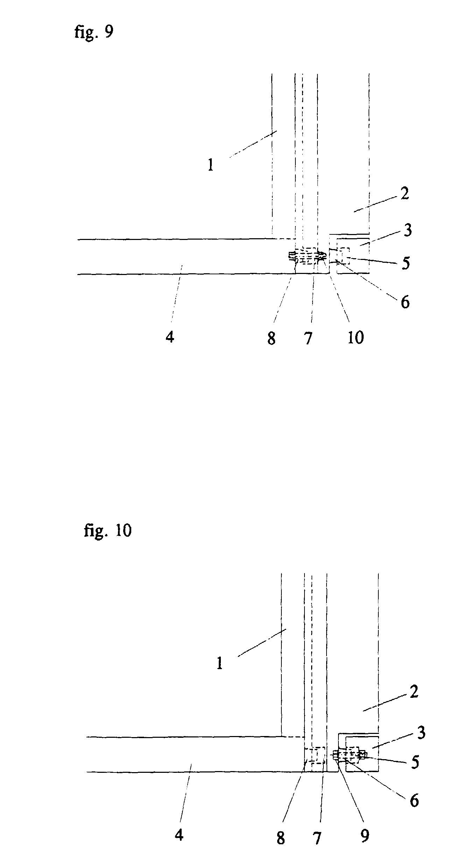

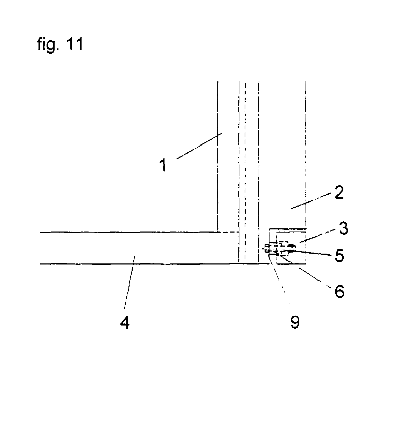

Fig. 1 zeigt seitlich den oberen Heckaufbau bei geschlossenem Dach(4), wobei der Heckspriegel(1), hier als Klappspriegel, auf dem Heckportalträger(2) verkoppelt(8+7) aufliegt und dieser lösbar verbunden(6+5) ist mit den Heckseitenstützen(3). Fig. 2 zeigt die gleiche Anordnung heckseitig. Fig. 3 verdeutlicht die Trennung zwischen Heckspriegel(1) und Heckportalträger(2) zum Öffnen oder Heben des Daches(4) zur Be-/Entladung von oben mittels Kran oder zum einseitigen Anheben des Daches(4), wie in Fig. 5 dargestellt, für eine seitliche Be-/Entladung mittels Gabelstapler. Die gleiche Trennung erfolgt in fig. 6 für das Heben des Daches(4) zur beidseitigen Be-/Entladung. In den geschilderten Fällen entfällt das lästige Öffnen von Hecktüren sowie das Entzurren der Heckplane. Soll die Be-/Entladung heckseitig mittels Gabelstapler oder Kran erfolgen, so stört der Heckportalträger. In diesem Falle wird er nach Entfernen der Heckplane bzw. Öffnung der Hecktüren und Entriegelung durch den Klappspriegel(1) von den Heckseitenstützen(3) gehoben und mit dem Klappspriegel(1) in Richtung Fahrzeugstirnwand bewegt, wie fig. 4. zeigt. Die fig. 7 und fig. 8 zeigen eine Anordnung für einen einfachen Heckspriegel(1) mit horizontaler Kopplung(8+7) Heckspriegel(1)-Heckportalträger(2) und horizontaler Kopplung(6+5) Heckportalträger(2)-Heckseitenstützen(3). Bei dieser Konstruktion wird der Heckportalträger(2) nur horizontal bewegt. Soll der Heckportalträger(2) zur Be-/Entladung ständig mit dem beweglichen Dach(4) transportiert werden, so kann die lösbare Verbindung(8) Heckspriegel(1)-Heckportalträger(2) durch Verschraubung zur starren Verbindung(10) umfunktioniert werden, wie in fig. 9 dargestellt. Die lösbare Verbindung(6) Heckportalträger(2)-Heckseitenstützen(3) kann, wie fig. 10 und fig. 11 zeigen, ebenfalls als starre Verbindung(9) ausgeführt werden, wobei auch eine Verbindung zwischen Heckspriegel(1) und Heckportalträger(2) entfallen kann. Das ist z.B. bei der herkömmlichen Ausführung mit starr fixiertem Heckportalträger der Fall. Für alle geschilderten Varianten ist erfindungsgemäß eine einzige Heckportalträgerausführung, wie bereits beschrieben, einsetzbar. Die Entriegelung der lösbaren Sicherungen der Verbindungen erfolgt von Hand durch Bowdenzug oder Gestänge. Sie kann aber auch über Stellmotoren, Pneumatik oder Hydraulik erfolgen.

Durch die erfindungsgemäße Heckportalträgerkombination werden die im Stand der Technik angeführten Nachteile weitestgehend eingeschränkt. Als Vorteile der erfinderischen Lösung gegenüber dem Stand der Technik mit äußerst positiver Auswirkung auf die Transportökonomie sind zu nennen
- eine wesentliche Verkürzung der Be- und Entladezeit durch die Möglichkeit der automatischen Verlagerung des Heckportalträgers innerhalb des Fahrzeugverbundes,
- einfache Ent- oder Verriegelung der Sicherung der lösbaren Verbindungen aus sicherem Stand von außen oder aus der Fahrerkabine,
- keine Behinderung durch ausgeschwenkte oder außerhalb des Fahrzeugverbundes ablegte Teile,
- Verringerung der Unfallgefahr und Verminderung von Materialschäden,
- Gabelstaplereinsatz bei nur heckseitiger Be-/Entlademöglichkeit und maximaler Laderaumnutzung,
- maximale Laderaumnutzung bei automatischer Verriegelung,
- volle Stabilität des Fahrzeugverbundes im Fahrbetrieb durch Erhalt der eigentlichen seitenkräfteaufnehmenden Heckträgerfunktion,
- Nachrüstbarkeit,
- elegante Lösung.

Durch die erfindungsgemäße Möglichkeit der automatischen Verlagerung des Heckportalträgers ist ein wesentlicher technischer Fortschritt zu verzeichnen.

## Patentansprüche

1. Heckportalträgerkombination für Fahrzeuge aller Art mit beweglichem Dach zur universellen Be- und Entladung, vorzugsweise Schiebe- oder Faltdachkonstruktion, dadurch gekennzeichnet, daß der Heckportalträger (2)
- durch Führung(5) und lösbarer Sicherung einer Verbindung(6) auf den Heckseitenstützen(3) lagert,
- durch Führung(7) und Sicherung einer Verbindung(8) zur Kombination als Bestandteil des Daches(4) mit dem Heckspriegel (1) des beweglichen Daches(4) lösbar gekoppelt ist und
- bei gelöster Sicherung der Verbindung(6) gegenüber den Heckseitenstützen(3) mit dem Heckspriegel(1) aus der Führung(5) der Heckseitenstützen(3) bei Dachöffnung und/oder Dachhub bewegt werden kann
oder
- bei gesicherter Verbindung(6) gegenüber den Heckseitenstützen(3) und gelöster Verbindung(8) zum Heckspriegel(1) bei Dachöffnung oder Dachhub als Heckportalträger(2) auf den Heckseitenstützen (3) verbleibt.

2. Heckportalträgerkombination für Fahrzeuge aller Art mit beweglichem Dach zur universellen Be- und Entladung, vorzugsweise Schiebe- oder Faltdachkonstruktion, dadurch gekennzeichnet, daß der Heckportalträger
- durch Führung(5) und lösbarer Sicherung einer Verbindung(6) auf den Heckseitenstützen(3) lagert,
- durch eine starre Verbindung(10) zur Kombination als kompakter Bestandteil des Daches(4) mit dem Heckspriegel(1) verbunden
und
- bei gelöster Sicherung der Verbindung(6) gegenüber den Heckseitenstützen(3) bei Dachöffnung und/oder Dachhub zu bewegen ist.

3. Heckportalträgerkombination nach Anspruch 1 oder 2, dadurch gekennzeichnet, daß die Verbindungselemente (7+8),(5+6) des Heckportalträgers(2) zum beweglichen Dach(4) und den Heckseitenstützen(3) lösbare Verbindungen darstellen und durch zusätzliche Arretierung zu starren Verbindungen(9+10) umzufunktionieren sind und somit der Heckportalträger(2) multifünktionell bei der Herstellung von Nutzfahrzeugen mit beweglichem Dach(4) montierbar ist als
- Heckportalträger(2) mit starrer Verbindung(9) zu den Heckseitenstützen(3) und lösbarer Verbindung(8) zum Heckspriegel(1) des beweglichen Daches(4),
- Heckportalträger(2) mit starrer Verbindung(9) zu den Heckseitenstützen(3) und fehlender Verbindung zum Dach(4) als übliche Trägeranordnung,
- Heckportalträgerkombination(2) mit lösbarer Sicherung der Verbindung(6) zu den Heckseitenstützen(3) und lösbarer Sicherung der Verbindung(8) zum Heckspriegel(1) des beweglichen Daches(4),
- Heckportalträgerkombination(2) mit lösbarer Sicherung der Verbindung(6) zu den Heckseitenstützen(3) und starrer Verbindung(10) mit dem Dach(4).

4. Heckportalträgerkombination nach einem der Ansprüche 1 bis 3, dadurch gekennzeichnet, daß die Führung(5+7) am Heckportalträger(2) und die Verbindungen(6+8) am Heckspriegel(1) und Heckseitenstützen(3) angeordnet sind.

5. Heckportalträgerkombination nach einem der Ansprüche 1 bis 4, dadurch gekennzeichnet, daß die Führungselemente(5,6,7,8) Heckseitenstützen(3)-Heckportalträger(2) sowie Heckspriegel(1)- Heckportalträger(2) zugleich lösbare oder starre (9,10) Verbindungselemente darstellen und vorzugsweise aus Bolzen(6,8) und Hülsen(5,7) bestehen, wobei die Verbindung mit den Heckseitenstützen(3) eine stabile Heckrahmenkonstruktion des Fahrzeugaufbaues gewährleisten.

6. Heckportalträgerkombination nach einem der Ansprüche 1 bis 5, dadurch gekennzeichnet, daß der Heckspriegel(1) des Schiebe- oder Faltdaches(4) horizontal an dem Heckportalträger(2) gekoppelt und der Heckportalträger(2) bei gelöster Sicherung der Verbindung(6) gegenüber den Heckseitenstützen(3) mit dem Heckspriegel(1) horizontal in Richtung Stirnwand verschoben wird.

7. Heckportalträgerkombination nach einem der Ansprüche 1 bis 5, dadurch gekennzeichnet, daß der Heckspriegel(1) des Schiebe- oder Faltdaches(4) als Klappspriegel(1) ausgebildet ist und der Heckportalträger(2) bei gelöster Verbindung(6) zu den Heckseitenstützen(3) aus der Führung(5) gehoben und mit dem Klappspriegel(1) in Richtung Stirnwand befördert wird.

8. Heckportalträgerkombination nach Anspruch 2, dadurch gekennzeichnet, daß der Heckportalträger(2) als Heckspriegel(1) ausgebildet und bei gelöster Sicherung der Verbindung(6) gegenüber den Heckseitenstützen(3) bei Dachöffnung und/oder Dachhub zu bewegen ist.

9. Heckportalträgerkombination nach einem der Ansprüche 1 bis 8, dadurch gekennzeichnet, daß beim Schließ- bzw. Senkvorgang des Daches(4) die Verriegelung Heckspriegel(1)-Heckportalträger(2) oder Heckportalträger(2)-Heckseitenstützen(3) selbsttätig erfolgt.

10. Heckportalträgerkombination nach einem der Ansprüche 1 bis 8, dadurch gekennzeichnet, daß das Lösen der Sicherung von Hand oder automatisch erfolgt.

11. Heckportalträgerkombination nach einem der Ansprüche 1 bis 8, dadurch gekennzeichnet, daß der Heckportalträger(2) aus Leichtbaustoff gefertigt ist.

## Claims

1. A rear portal member combination for vehicles of any type with a movable roof designed for universal loading and unloading, preferably a sliding or folding roof structure,
characterised in, that the rear portal member (2)
- rests through a guiding means (5) and releasable locking of a connection (6) on the rear side supports (3),
- is disconnectably coupled to the rear bow (1) of the movable roof (4) through a guiding means (7) and locking of a connection (8) to the combination as constituent part of the roof (4), and
- if the locking of the connection (6) to the rear side supports (3) is released, the said rear portal member (2) can be moved with the rear bow (1) out of the guiding means (5) of the rear side supports (3) when the roof is opened and/or lifted,
or
- if the connection (6) to the rear side supports (3) is locked and the connection (8) to the rear bow (1) is disconnected, it continues to rest as rear portal member (2) on the rear side supports (3) when the roof is opened or lifted.

2. A rear portal member combination for vehicles of any type with a movable roof designed for universal loading and unloading, preferably a sliding or folding roof structure,
characterised in, that the rear portal member
- rests on the rear side supports (3) through a guiding means (5) and releasable locking of a connection (6),
- is connected with the rear bow (1) through a rigid connection (10) to the combination as compact constituent part of the roof (4),
and
- if the locking of the connection (6) to the rear side supports (3) is released, the said real portal member (2) can be moved when the roof is opened and/or lifted.

3. The rear portal combination of claim 1 or 2, characterised in, that the connecting elements (7+8), (5+6) of the rear portal member (2) are disconnectable connections relative to the movable roof (4) and rear side supports (3) and can be turned into rigid connections (9+10) through additional locking means so that the rear portal member (2) can be multifunctionally incorporated in the manufacture of commercial vehicles with a movable roof (4) as a
- rear portal member (2) with rigid connection (9) to the rear side supports (3) and disconnectable connection (8) to the rear bow (1) of the movable roof (4),
- rear portal member (2) with rigid connection (9) to the rear side supports (3) and without any connection to roof (4) as conventional member arrangement,
- rear portal member combination (2) with releasable locking of the connection (6) to the rear side supports (3) and releasable locking of connection (8) to the rear bow (1) of the movable roof (4),
- rear portal member combination (2) with releasable locking of the connection (6) to the rear side supports (3) and rigid connection (10) to the roof (4).

4. The rear portal member combination of any one of claims 1 through 3, characterised in, that the guiding means (5+7) is arranged on the rear portal member (2) and the connections (6+8) on the rear bow (1) and rear side supports (3).

5. The rear portal member combination of any one of claims 1 through 4, characterised in, that the guiding elements (5,6,7,8) between the rear side supports (3) and rear portal member (2) as well as between rear bow (1) and rear portal member (2) represent at the same time disconnectable or rigid (9,10) connecting elements and consist preferably of pins (6,8) and sleeves (5,7), with the connection with the rear side supports (3) providing for a stable rear frame structure of the vehicle body.

6. The rear portal member combination of any one of claims 1 through 5, characterised in, that the rear bow (1) of the sliding or folding roof (4) is coupled horizontally to the rear portal member (2) and that, when the locking means of the connection (6) to the rear side supports (3) is released, the rear portal member (2) is horizontally shifted with the rear bow (1) in the direction of the front wall.

7. The rear portal member combination of any one of claims 1 through 5, characterised in, that the rear bow (1) of the sliding or folding roof (4) is designed as a folding bow (1) and that, when the connection (6) to the rear side supports (3) is disconnected, the rear portal member (2) is lifted out of the guiding means (5) and moved with the folding bow (1) in the direction of the front wall.

8. The rear portal member combination of claim 2, characterised in, that the rear portal member (2) is designed as rear bow (1) and, if the locking means of the connection (6) to the rear side supports (3) is released, the said rear portal member (2) can be moved when the roof is opened and/or lifted.

9. The rear portal member combination of any one of claims 1 through 8, characterised in, that, when the roof (4) is being closed or lowered, the locking of the rear bow (1) and rear portal member (2) or of the rear portal member (2) and rear side supports (3) takes place automatically.

10. The rear portal member combination of any one of claims 1 through 8, characterised in, that releasing of the locking means is performed by hand or automatically.

11. The rear portal member combination of any one of claims 1 through 8, characterised in, that the rear portal member (2) is made from light-weight material.

## Revendications

1. Portique support arrière combiné pour toutes sortes de véhicules d'une toiture mobile pour chargement et déchargement universel, d'une construction de toit ouvrant ou toit plissé de préférence, caractérisé en ce que le portique support arrière (2)
- est logé sur les appuis de côté arrière (3) par un guidage (5) et une sécurité détachable d'un assemblage (6),
- est couplé, de manière détachable, avec l'arceau arrière (1) du toit mobile (4) par un guidage (7) et une sécurité d'un assemblage (8) à combiner pour en faire partie du toit (4)
et
- est mobile avec l'arceau arrière (1) sortant du guidage (5) des appuis de côté arrière (3) à l'ouverture et/ou au levage de toit, si la sécurité du raccord (6) vis-à-vis des appuis de côté arrière (3) est détachée
ou
- reste comme portique support arrière (2) sur les appuis de côté arrière (3) à l'ouverture et/ou au levage de toit, si l'assemblage (6) vis-à-vis des appuis de côté arrière (3) est assuré et l'assemblage (8) à l'arceau arrière (1) est détaché.

2. Portique support arrière combiné pour toutes sortes de véhicules d'une toiture mobile pour chargement et déchargement universel, d'une construction de toit ouvrant ou toit plissé de préférence, caractérisé en ce que le portique support arrière
- est logé sur les appuis de côté arrière (3) par un guidage (5) et une sécurité détachable d'un assemblage (6),
- est lié à l'arceau arrière (1) à l'aide d'un assemblage rigide (10) à combiner pour en faire partie compacte du toit (4)
et
- est mobile à l'ouverture et/ou au levage de toit, si la sécurité de l'assemblage (6) vis-à-vis des appuis de côté arrière (3) est détachée.

3. Portique support arrière combiné selon la revendication 1 ou 2, caractérisé en ce que les raccords (7+8), (5+6) du portique support arrière (2) au toit mobile (4) et aux appuis de côté arrière (3) constituent des assemblages détachables dont on peut faire des assemblages rigides (9 et 10) moyennant arrêtage supplémentaire de manière à ce que le portique support arrière (2) puisse être monté en multifonction dans la fabrication des véhicules utilitaires disposant d'un toit mobile (4) sous forme de
- portique support arrière (2) ayant un assemblage rigide (9) par rapport aux appuis de côté arrière (3) et ayant un assemblage détaché (8) par rapport à l'arceau arrière (1) du toit mobile (4),
- portique support arrière (2) ayant un assemblage rigide (9) par rapport aux appuis de côté arrière (3) et sans assemblage au toit (4) comme structure de support standard,
- portique support arrière (2) ayant une sécurité détachable de l'assemblage (6) par rapport aux appuis de côté arrière (3) et ayant une sécurité détachable de l'assemblage (8) par rapport à l'arceau arrière (1) du toit mobile (4),
- portique support arrière (2) ayant une sécurité détachable de l'assemblage (6) par rapport aux appuis de côté arrière (3) et ayant un assemblage rigide (10) au toit (4).

4. Portique support arrière combiné selon une des revendications 1 à 3, caractérisé en ce que le guidage (5+7) est placé sur le portique support arrière (2) et que les attaches (6+8) se trouvent sur l'arceau arrière (1) et les appuis de côté arrière (3).

5. Portique support arrière combiné selon une des revendications 1 à 4, caractérisé en ce que les éléments de guidage (5,6,7,8), appuis de côté arrière (3) - portique support arrière (2) ainsi que l'arceau arrière (1) - portique support arrière (2) sont à la fois des attaches détachables et rigides (9,10), constituées de préférence des boulons (6,8) et douilles (5,7), pendant que l'assemblage aux appuis de côté arrière (3) garantit une construction châssis arrière stable de la carrosserie.

6. Portique support arrière combiné selon une des revendications 1 à 5, caractérisé en ce que l'arceau arrière (1) du toit ouvrant ou plissé (4) est couplé horizontalement au portique support arrière (2) et que ce dernier (2), en détachant la sécurité de l'assemblage (6), sera déplacé horizontalement, vis-à-vis des appuis de côté arrière (3), avec l'arceau arrière (1) en direction du tablier.

7. Portique support arrière selon une des revendications 1 à 5, caractérisé en ce que l'arceau arrière (1) du toit ouvrant ou plissé (4) forme un arceau à bascule (1) et que le portique support arrière (2), en détachant l'assemblage (6) par rapport aux appuis de côté arrière (3), sort de son guidage (5) et se dirige avec le cerceau à bascule (1) vers le tablier.

8. Portique support arrière combiné selon la revendication 2, caractérisé en ce que le portique support arrière (2) forme un arceau arrière (1) et à l'ouverture et/ou levage de toit, il s'avère mobile vis-à-vis des appuis de côté arrière (3) au détachement de la sécurité de l'assemblage (6).

9. Portique support arrière combiné selon une des revendications 1 à 8, caractérisé en ce que l'arceau arrière (1) - portique support arrière (2) ou portique support arrière (2) - appuis de côté arrière (3) se verrouillent automatiquement à la fermeture ou à la descente du toit (4).

10. Portique support arrière combiné selon une des revendications 1 à 8, caractérisé en ce que le détachement de la sécurité est manuel ou automatique.

11. Portique support arrière combiné selon une des revendications 1 à 8,caractérisé en ce que le portique support arrière (2) est fabriqué en matière légère.
